# EUROPÄISCHE PATENTSCHRIFT

(11) **EP 0 630 142 B1**
(45) Veröffentlichungstag und Bekanntmachung des Hinweises auf die Patenterteilung: **11.11.1998**
(21) Anmeldenummer: 94106915.5
(22) Anmeldetag: 03.05.1994
(51) Int. Cl.: H04M 3/50

(54) **Verfahren zur Abspeicherung von Nachrichten in vernetzten Nachrichtenspeichereinheiten**
Method for storing of messages in storage units linked in networks for messages
Procédé pour mémoriser des messages dans des unités mémoire connectées en réseau de messagerie

(30) Priorität: 28.05.1993 DE 4317894
(43) Veröffentlichungstag der Anmeldung: 21.12.1994
(73) Patentinhaber: SIEMENS AKTIENGESELLSCHAFT, 80333 München (DE)
(72) Erfinder: Amereller, Walter, Dipl.-Ing., D-81549 München (DE); Ersue, Mehmet, Dipl.-Ing., D-81373 München (DE); Liebl, Franz, D-85368 Moosburg (DE); Maurer, Gerald, D-81245 München (DE)

(56) Entgegenhaltungen:
- DE-A- 3 724 847
- PATENT ABSTRACTS OF JAPAN, unexamined applications, E Field, Band 16, Nr. 312, 9. Juli 1992 THE PATENT OFFICE JAPANESE GOVERNMENT Seite 141 E 1230; & JP-A-04-87 448 (NEC)
- PATENT ABSTRACTS OF JAPAN, unexamined applications, E Field, Band 9, Nr. 315, 11. Dezember 1985 THE PATENT OFFICE JAPANESE GOVERNMENT Seite 95 E 365; & JP-A-60-148 266 (FUJITSU)

## Beschreibung

Es sind unterschiedliche Fernsprechnebenstellenanlagen bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählt unter anderem die Abspeicherung von Sprachnachrichten in sogenannten Mailboxen, die bestimmten Adressaten zugeordnet sind.

Aus den Produktschriften der Fa. Siemens "HICOM 600 System Product Data", Bestell-Nr. A19100-K 3161-G430-01-7600 (Seite 19), und "ISDN in the Office", Special Issue of Telcom Report and Siemens Magazin COM, Seiten 56 bis 64 und 73-80, ISBN 3-8009-3849-9 ist bereits eine rechnergesteuerte Fernsprechnebenstellenanlage mit solchen Mailboxen bekannt.

Aus der deutschen Offenlegungsschriften DE 37 32 832 A1 und DE-37 24 847A1 ist bereits ein Verfahren und eine Anordnung zur Abspeicherung von Fernmeldenachrichten bekannt. Bei dem bekannten Verfahren ist unter anderem vorgesehen, daß in den Speicher eines Nachrichtenadressaten hinterlegte Nachrichten in den Speicher des Nachrichtenabsenders rückübertragen werden, wenn der Nachrichtenadressat die Nachricht nicht bis zu einem bestimmten Zeitpunkt abruft.

Der Erfindung liegt die Aufgabe zugrunde, ein Verfahren der eingangs genannten Art anzugeben, das eine Zustellung derselben Nachricht an eine Mehrzahl von Nachrichtenadressaten ermöglicht.

Die Lösung dieser Aufgabe erfolgt erfindungsgemäß mit den Merkmalen des Patentanspruchs 1. Als wesentlich für die Erfindung ist anzusehen, daß von einem Nachrichtenadressaten nicht abgerufene Nachrichten die Kapazität des ihm zugeordneten Speichers nicht über eine vorgebbare Zeit binden. Der Absender einer nicht abgerufenen Nachricht wird über den Nichtabruf der Nachricht informiert, ohne daß Nachrichten, die zu dem Speicher des Nachrichtenabsenders rückübertragen werden, diesen Speicher belasten. Dieser Vorteil ergibt sich insbesondere, wenn eine Nachricht an eine Vielzahl von Adressaten übertragen wird und die Nachricht von mehreren Adressaten nicht abgerufen wird.

Eine Ausführungsform der Erfindung wird nun anhand der Figuren beschrieben. Es zeigen
Figur 1 vernetzte Fernmeldenebenstellenanlagen mit Nachrichtenspeichereinheiten, in die entsprechend dem erfindungsgemäßen Verfahren Nachrichten abspeicherbar sind, und
Figur 2 eine Fernmeldenebenstellenanlage nach Figur 1.

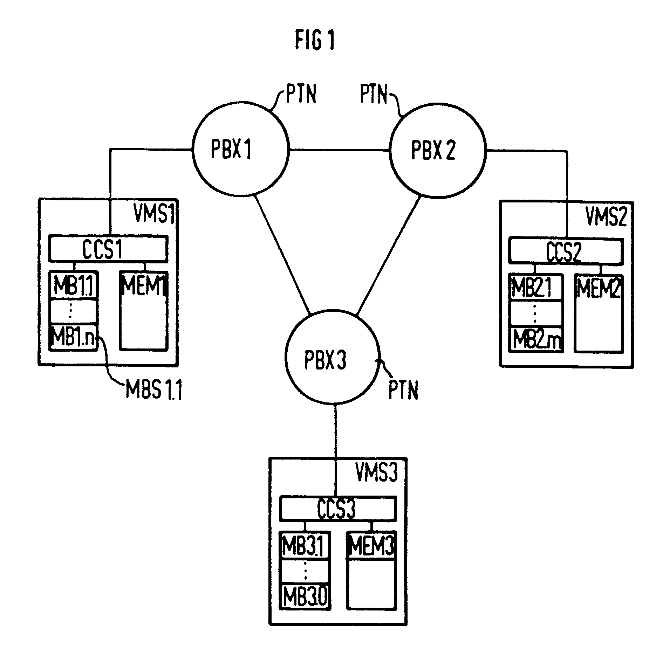

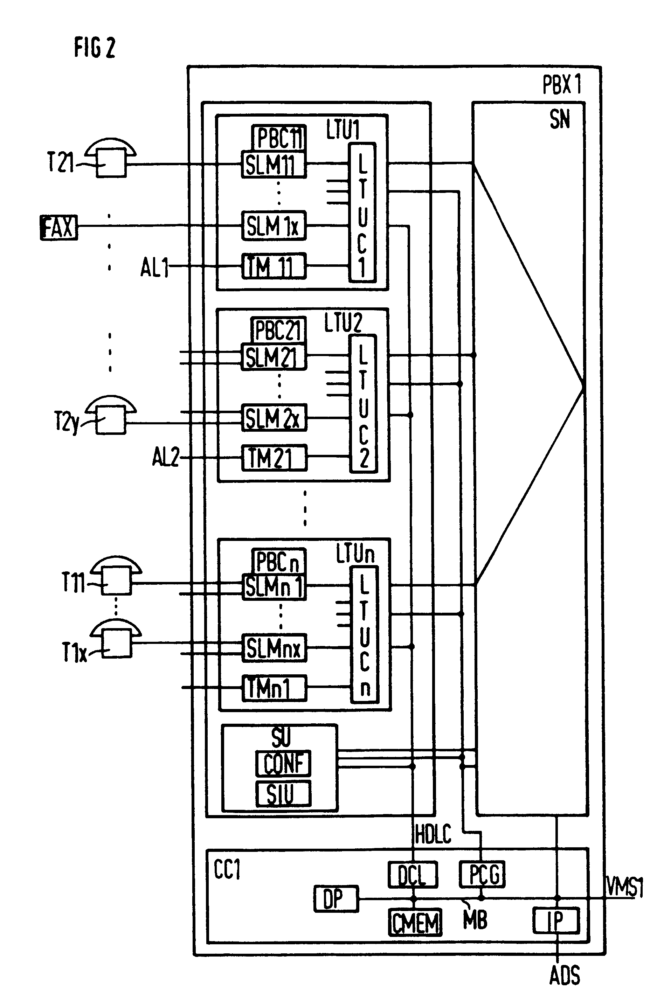

In Figur 1 ist ein Netz mit 3 Fernmeldenebenstellenanlagen PBX1, PBX2 und PBX3 dargestellt. Jede dieser Nebenstellenanlagen kann beispielsweise wie die anhand von Figur 2 beschriebene Nebenstellenanlage ausgebildet sein, die in öffentliche Netze PTN sowie in private Netze komplexer Strukturen eingebunden sein können.

Jede in Figur 1 dargestellte Nebenstellenanlage PBX1, PBX2, PBX3 ist mit einer Nachrichtenspeichereinheit VMS1, VMS2 bzw. VMS3 verbunden. Eine solche Nachrichtenspeichereinheit umfaßt eine Steuerung CCS1, CCS2, CCS3, mindestens einen nachrichtenadressatenindividuellen Speicher (MB1.1,...MB1.n; MB2.1,...MB2.m; MB3.1,...MB3.o) sowie gegebenenfalls jeweils mindestens einen Zwichenspeicher (MEM1, MEM2, MEM3). Adressatenindividuelle Nachrichten werden im Rahmen des erfindungsgemäßen Verfahrens beispielsweise zunächst in den Zwischenspeicher zwischengespeichert und von dort in den zugehörigen adressatenindividuellen Nachrichtenspeicher übertragen. Alternativ hierzu können adressatenindividuelle Nachrichten auch direkt, d. h. ohne Zwischenspeicherung in den jeweiligen adressatenindividuellen Nachrichtenspeicher eingeschrieben werden.

In der in Figur 1 dargestellten Anordnung ist einem Nachrichtenabsender ein Nachrichtenspeicher MBS1.1 zugeordnet. Dieser Nachrichtenspeicher MBS1.1 des Nachrichtensenders dient in dem in Figur 1 dargestellten Ausführungsbeispiel zugleich der Aufnahme von adressatenindividuellen Nachrichten und ist daher auch mit dem Bezugszeichen MB1.n bezeichnet. Dieser Speicher MBS1.1 bzw. MB1.n ist also genau einem Teilnehmer zugeordnet, der sowohl eine Nachricht senden als auch Nachrichten empfangen kann.

Die in Figur 2 dargestellte Fernmeldenebenstellenanlage kann wie die in den eingangs beschriebenen Produktschriften offenbarte Nebenstellenanlage bzw. wie das Fernmeldevermittlungssystem strukturiert sein, das in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) offenbart ist. Der Software-Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transport funktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Gerätetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Die in der Figur 2 dargestellte Anlage besteht aus einer Systemzentrale PBX1 mit einem Steuerwerk CC, das mit sogenannten Peripheriemodulen und einem Koppelnetz SN verbindbar ist. Die Peripheriemodule umfassen insbesondere Teilnehmeranschlußschaltungen SLM11...SLM1X, SLM21... SLM2X, SLMn1...SLMnX sowie sogenannte Leitungssatzschaltungen TM11, TM21 und TMn1.

Die Teilnehmeranschlußschaltungen SLM sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte. Die in Figur 2 dargestellten Endgeräte T11, T1X, T21, T2y sind vorzugsweise digitale Sprachendgeräte, mit denen Sprachnachrichten in Nachrichtenspeichereinheiten VMS1; VMS2, VMS3 (Figur 1) eingegeben werden können und mit denen Sprachnachrichten aus einem dem jeweiligen Teilnehmer bzw. Endgerät zugeordneten Speicher MBS1.1 (Figur 1) abgerufen werden können. Ein Faxgerät FAX dient der Hinterlegung von Faxnachrichten in bzw. dem Abruf von Faxnachrichten aus entsprechenden Speichern.

Die Leitungssatzschaltungen TM11, TM21, TMnl dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- und/oder Dateninformationen übertragen werden, an eine beliebige Auswahl aus zwei Multiplexkanälen (highways) mit beispielsweise 32 Kanälen des Koppelnetzes SN und übergeben die in einem Steuerkanal D übertragenen Signalisierungsinformationen als HDLC-Protokoll an die Steuerung CC1. Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

Mehrere Peripheriemodule können funktionell zu einer Anschlußeinheit LTU zusammengefaßt werden. Jeder Anschlußeinheit LTU1...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der Steuerung CC erfolgt über einen Signalisierungskanal, der in Figur 2 mit dem Bezugszeichen HDLC bezeichnet ist, im bekannten HDLC-Punkt- zu -Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

Das Steuerwerk CC1 übernimmt im Zusammenwirken mit den Steuerungen PCB11..., LTUC1... die entsprechend dem Peripherieaufbau anfallende vermittlungstechnische Verarbeitung. Es besteht aus einem Datenprozessor DP, einem Prozessor für Signalisierungssteuerung DCL, einem Taktgenerator PCG, einem Speicher CMEM und einem Schnittstellenprozessor IP, der mit einer in Figur 2 nicht dargestellten betriebstechnischen Einheit ADS verbunden ist. Der Speicher CMEM enthält eine Datenbasis mit Konfigurationsdaten, zu denen die Zuordnung der Endgeräte T11...T1x, T21...T2y zu teilnehmerindividuellen Nachrichtenspeichern (Figur 1 MB1.1,...; MBS1) gehört. Die genannten Komponenten sind über einen Multibus MB, wie in der Figur 2 dargestellt, miteinander und mit einer Nachrichtenspeichereinheit VMS1 verbunden, die insbesondere als integrierter Server ausgebildet ist (Fa. Siemens: "ISDN in the Office", Seiten 73-80).

Für den Datenprozessor DP werden vorzugsweise Prozessoren der Reihe SAB 80286/80386/80486 (Fa. Intel) verwendet. Im Speicher CMEM ist das der Steuerung CC1 zugeordnete Programm abgelegt, das das erfindungsgemäße Verfahren definiert. Der Speicher CMEM enthält hochintegrierte dynamische RAM-Bausteine und Fehlerkorrekturschaltungen.

Der Prozessor DCL für Signalisierungssteuerung dient dem Abwickeln des HDLC-Protokolls zu den Anschlußeinheiten LTU1...LTUn und der Serviceeinheit SU.

Der Taktgenerator PCG führt die Taktversorgung der Fernmeldenebenstellenanlage durch.

Im folgenden wird davon ausgegangen, daß ein Nachrichtenabsender, dem ein Speicher MBS1 zugeordnet ist, eine für einen Nachrichtenadressaten bestimmte Nachricht generiert. Das der Steuerung CCS1 zugeordnete Steuerungsprogramm ist dabei in der Weise ausgestaltet, daß Nachrichten bei ihrer Generierung mit einer nachrichtenindividuellen Information versehen werden. Diese Information umfaßt beispielsweise eine Identifikation des Nachrichtenspeichers (z.B.MBS1.1) der dem Absender der Nachricht zugeordnet ist, sowie einen Uhrzeit-/Datum-Stempel. Diese nachrichtenindividuelle Information wird gemeinsam mit der eigentlichen Nachricht an die jeweilige Nachrichtenspeichereinheit (z. B. VMS2, Figur 1) übertragen, wo sie direkt in den jeweiligen adressatenindividuellen Speicher des Adressaten (z. B. MB2.1, Figur 1) oder alternativ hierzu in den Zwischenspeicher MEM2 eingeschrieben wird. Dieselbe Nachricht kann für unterschiedliche Nachrichtenadressaten in eine Mehrzahl entsprechender Nachrichtenspeicher eingeschrieben werden, z. B. in die Nachrichtenspeicher MB1.n (VMS1), MB2.1,...MB2.m (VM S2) und MB3.1 (VMS3).

Die Nachrichten lassen sich mittels beliebiger Endgeräte generieren. Gibt der Absender die Nachricht in das ihm zugeordnete Endgerät (z.B. T11) ein, so bildet die Steuerung CC1 die nachrichtenindividuelle Information auf der Grundlage eines Konfigurationsdatums (Zuordnung Endgerät T11 - Speicher MBS1.1) selbsttätig. Gibt der Absender die Nachricht in ein beliebiges, ihm nicht zugeordnetes Endgerät (z.B. in einer "fremden" Nebenstellenanlage PBX2) ein, so hat er zusätzlich eine seinen Nachrichtenspeicher MBS1.1 identifizierende Nachricht einzugeben, beispielsweise mittels einer Chipkarte, die von einer Leseeinrichtung des jeweiligen Endgeräts gelesen wird. Der Absender kann die Nachricht auch von einem beliebigen Endgerät in seinem Speicher MBS1.1 zusammen mit adressatenindividuellen Informationen und einem die entsprechende Übertragung auslösenden Befehl eingeben.

Das der Nachrichtenspeichersteuereinheit (z. B. CCS1 in VMS1) zugeordnete Programm ist in der Weise ausgestaltet, daß eine adressatenindividuelle Nachricht zunächst in denjenigen Zwischenspeicher (z. B. MEM1) abgespeichert wird, der der Nachrichtenspeichereinheit (z. B. VMS1) zugeordnet ist, deren Steuerung (CCS1) den jeweiligen adressatenindividuellen Nachrichtenspeicher verwaltet. Die an die Nachrichtenspeichereinheit (z. B. VMS2) übertragene Nachricht wird auf Übertragung von dem Zwischenspeicher (MEM2) in den adressatenindividuellen Speicher (z. B. MB2.1) überprüft. Für den Fall, daß die Nachricht innerhalb einer vorgebbaren Zeit beispielsweise wegen einer Betriebsstörung oder mangels freier Speicherkapazität nicht von dem Zwischenspeicher (MEM2) in den adressatenindividuellen Speicher (MB2.1) übertragen wird, veranlaßt die Nachrichtenspeichersteuereinheit CCS2 die Rückübertragung der Nachricht sowie der nachrichtenindividuellen Information an den Speicher MBS1 (in VMS1), der dem Nachrichtenabsender zugeordnet ist. Die diesem Speicher MBS1 zugeordnete Steuerung CCS1 überprüft die nachrichtenindividuellen Informationen rückübertragener Nachrichten auf Identität. Wird Identität nicht erkannt, wird die zugehörige Nachricht in dem Speicher MBS1 abgespeichert. Wird Identität erkannt, unterbleibt demgegenüber die Abspeicherung der Nachricht in den Speicher MBS1. In diesem Fall ist lediglich die Abspeicherung der nachrichtenindividuellen Information bzw. einer daraus abgeleiteten Information vorgesehen, mit der der Nachrichtenabsender über die Rückübertragung der durch diese Information bestimmte Nachricht informiert wird.

## Patentansprüche

1. Verfahren zur Abspeicherung von Nachrichten in vernetzten Nachrichtenspeichereinheiten (VMS1,...VMS3), wobei Nachrichtenspeichereinheiten (VMS1,...VMS3) jeweils mindestens einen adressenindividuellen Nachrichtenspeicher (MB1.1,...MB1.n; MB2.1,...,MB2.m; MB3.1,...,MB 3.o) aufweisen, wobei Nachrichtenabsendern jeweils ein Nachrichtenspeicher (MBS1.1,...) zugeordnet ist, wobei den Nachrichtenspeichereinheiten (VMS1,...,VMS3) und den den Nachrichtenabsendern zugeordneten Nachrichtenspeichern (MBS1.1,...) zusammenwirkende Steuerungen (CC1,...CC3) zugeordnet sind, wobei von einem Nachrichtenabsender generierte Nachrichten jeweils an eine Mehrzahl von adressatenindividuellen Nachrichtenspeichern (MB1.1,...MB1.n;MB2.1,...,MB2.m; MB3.1,...,MB 3.o)übertragbar ist,
**dadurch gekennzeichnet**,
daß den Nachrichtenspeichereinheiten (VMS1,...,VMS3) Zwischenspeicher (MEM1,...MEM3) für die Zwischenspeicherung adressatenindividueller Nachrichten zugeordnet sind, daß den Steuerungen (CC1,...CC3) ein in der Weise ausgestaltetes Steuerungsprogramm zugeordnet ist, daß Nachrichten bei ihrer Generierung mit einer nachrichtenindividuellen Information versehen werden, daß adressatenindividuelle Nachrichten nach ihrer Generierung in den Zwischenspeicher (MEM1,..., MEM3) der dem adressatenindividuellen Nachrichtenspeicher zugeordneten Nachrichtenspeichereinheit (VMS1,..., VMS3) abgespeichert werden, daß adressatenindividuelle Nachrichten, die innerhalb einer vorgebbaren Zeit nicht von einem Zwischenspeicher (MEM1,...MEM3) in den zugehörigen adressatenindividuellen Nachrichtenspeicher (MB1.1,...; MB2.1,...; MB3.1,...) übertragen werden, in den dem Nachrichtenabsender zugeordneten Nachrichtenspeicher (MBS1.1,...) rückübertragen werden, daß die dem Nachrichtenspeicher (MBS1.1,...) des Nachrichtenabsenders zugeordnete Steuerung (CCS1) nachrichtenindividuelle Informationen zugehender Nachrichten auf Identität überprüft, und sofern die Identität einer nachrichtenindividuellen Information einer zugehenden Nachricht mit einer nachrichtenindividuellen Information einer bereits zugegangenen Nachricht erkannt wird, die zugehende Nachricht nicht in den Nachrichtenspeicher (MBS1.1,...) des Nachrichtenabsenders abspeichert.

2. Verfahren nach Anspruch 1,
**dadurch gekennzeichnet**,
daß die Steuerung (CCS1) des den Nachrichtenabsendern zugeordneten Nachrichtenspeichers (MBS1.1,...) im Falle der Identität nachrichtenindividueller Informationen zugegangener Nachrichten eine die Rückübertragung der Nachricht vom ursprünglichen Nachrichtenadressaten bezeichnende Information in dem dem Nachrichtenabsender zugeordneten Nachrichtenspeicher (MBS1.1,...) abspeichert.

3. Schaltungsanordnung (VMS1) zur Durchführung des Verfahrens nach einem der vorstehenden Ansprüche,
**dadurch gekennzeichnet,**
daß diese eine Steuerung (CCS1) und mindestens einen, einem Nachrichtenabsender zugeordneten Speicher (MBS1.1) aufweist, und daß das der Steuerung (CCS1) zugeordnete Programm in der Weise ausgestaltet ist, daß nachrichtenindividuelle Informationen zugehender Nachrichten auf Identität überprüft werden.

## Claims

1. Method for storing messages in voice mail units (VMS1,...VMS3) connected into a network, which voice mail units (VMS1,...VMS3) in each case have at least one address-individual mailbox (MB1.1,...MB1.n; MB2.1,...,MB2.m; MB3.1,...,MB3.o), one mailbox (MBS1.1,...) in each case being allocated to message senders, interacting controllers (CC1,...CC3) being allocated to the voice mail units (VMS1, ... ,VMS3) and the mailboxes (MBS1.1,...) allocated to the message senders, messages generated by a message sender being in each case transmittable to a multiplicity of addressee-individual mailboxes (MB1.1,...MB1.n; MB2.1,..., MB2.m; MB3.1,..., MB3.o), characterized in that buffer memories (MEM1,...MEM3) allocated to the voice mail units (VMS1,...,VMS3) for temporarily storing addressee-individual messages, that a control programme, which is designed in such a manner that messages are provided with a message-individual information item during their generation, is allocated to the controllers (CC1,...CC3), that addressee-individual messages, after having been generated, are stored in the buffer memories (MEM1, ... MEM3) of the voice mail unit (VMS1, ... ,VMS3) allocated to the addressee-individual voice mailbox, that addressee-individual messages which are not transferred from a buffer memory (MEM1,...MEM3) into the associated addressee-individual mailbox (MB1.1, ...; MB2.1, ... ;MB3.1, ...) within a predeterminable time are transferred back into the mailbox (MBS.1,...) allocated to the message sender, that the controller (CCS1) allocated to the mailbox (MBS1.1,...) of the message sender checks message-individual information items of incoming messages for identity and if the identity of a message-individual information item of an incoming message with a message-individual information item of a message already received is detected, does not store the incoming message in the mailbox (MBS1.1,...) of the message sender.

2. Method according to Claim 1, characterized in that, in the case of the identity of message-individual information items of received messages, the controller (CCS1) of the mailbox (MBS1.1,...) allocated to the message senders stores an information item designating the return transmission of the message from the original message addressee in the mailbox (MBS1.1,...) allocated to the message sender.

3. Circuit arrangement (VMS1) for carrying out the method according to one of the preceding claims, characterized in that it exhibits a controller (CCS1) and at least one memory (MBS1.1) allocated to the message sender and that the programme allocated to the controller (CCS1) is designed in such a manner that message-individual information items of incoming messages are checked for identity.

## Revendications

1. Procédé pour mémoriser des messages dans des unités mémoire connectées en réseau de messagerie (VMS1,... VMS3), des unités mémoire (VMS1,... VMS3) comportant chacune au moins une mémoire spécifique à une adresse (MB1.1, ... MB1.n; MB2.1, ..., MB2.m; MB3.1, ..., MB 3.o), une mémoire de messages (MBS1.1, ...) étant affectée à chaque expéditeur de messages, des commandes interactives (CC1, ... CC3) étant affectées aux unités mémoire (VMS1,... VMS3) et aux mémoires de messages (MBS1.1,...) affectées aux expéditeurs de messages, des messages générés par un expéditeur de messages pouvant être transmis à une pluralité de mémoires spécifiques à une adresse (MB1.1,... MB1.n; MB2.1 ,..., MB2.m; MB3.1,..., MB 3.o),
**caractérisé par le fait**
que des mémoires intermédiaires (MEM1,... MEM3) pour le stockage intermédiaire de messages spécifiques à une adresse sont affectées aux unités mémoire (VMS1, ... VMS3), qu'un programme de commande est affecté aux commandes (CC1, ... CC3), ce programme étant conçu de telle sorte que les messages sont munis, lors de leur création, d'une information spécifique au message, que les messages spécifiques aux destinataires sont stockés, après leur génération, dans la mémoire intermédiaire (MEM1,... MEM3) de l'unité mémoire (VMS1,... VMS3) affectée à la mémoire spécifique au destinataire, que les messages spécifiques aux destinataires qui n'ont pas été transmis, à l'issue d'un intervalle de temps prédéterminé, d'une mémoire intermédiaire (MEM1,... MEM3) à la mémoire spécifique au destinataire correspondante (MB1.1,...; MB2.1,...; MB3.1,...), sont retournés à la mémoire de messages (MBS1.1, ...) affectée à l'expéditeur du message, que la commande (CCS1), qui est affectée à la mémoire de messages (MBS1.1, ...) de l'expéditeur, vérifie l'identité des informations spécifiques aux messages en arrivée et, dans la mesure où est reconnue une identité entre une information spécifique au message d'un message en arrivée et une information spécifique à un message déjà reçu, le message en arrivée n'est pas stocké dans la mémoire de messages (MBS1.1, ...) de l'expéditeur.

2. Procédé selon la revendication 1
**caractérisé par le fait**
que la commande (CCS1) de la mémoire de messages (MBS1.1,...) affectée aux expéditeurs, dans le cas de l'identité de l'information spécifique à des messages en arrivée, mémorise, dans la mémoire de messages (MBS1.1,...) affectée à l'expéditeur du message, une information caractérisant le renvoi du message par le destinataire original.

3. Montage (VMS1) pour la mise en oeuvre du procédé procédé selon une des revendications précédentes
**caractérisé par le fait**
qu'il comporte une commande (CCS1) et au moins une mémoire (MBS1.1) affectée à un expéditeur de messages et que le programme affecté à la commande (CCS1) est constitué de telle sorte que les informations spécifiques aux messages en arrivée sont vérifiées quant à leur identité.
